# EUROPÄISCHE PATENTANMELDUNG

(11) **EP 1 095 952 A1**
(43) Veröffentlichungstag der Anmeldung: **02.05.2001**
(21) Anmeldenummer: 00122214.0
(22) Anmeldetag: 16.10.2000
(51) Int. Cl.: C08F 36/00, C08F 4/52, C08F 4/58

(54) **Katalysator auf Basis von Verbindungen der Seltenen Erdmetalle**

(30) Priorität: 28.10.1999 DE 19951841
(71) Anmelder: BAYER AG, 51368 Leverkusen (DE)
(72) Erfinder: Knauf, Thomas, Dr., 41542 Dormagen (DE); Braubach, Wilfried, 42659 Solingen (DE)

(57) **Zusammenfassung**

Die vorliegende Erfindung besteht aus einem Katalysator auf Basis von Verbindungen der Seltenen Erdmetalle, bestehend aus einer Verbindung der Seltenen Erdmetalle, einer organischen Aluminium-Verbindung und einem Trihalogensilan, ein Verfahren zu dessen Herstellung sowie die Verwendung des Katalysators für die Polymerisation von konjugierten Dienen.

Mit Hilfe des erfindungsgemäßen Katalysators können konjugierte Diene in hohen Raum-Zeit-Ausbeuten zu hochmolekularen Polybutadienen polymerisiert werden.

## Beschreibung

Gegenstand der vorliegenden Erfindung ist ein Katalysator auf Basis von Verbindungen der Seltenen Erdmetalle, ein Verfahren zu dessen Herstellung sowie dessen Verwendung für die Polymerisation von konjugierten Dienen.

Die Polymerisation von konjugierten Dienen mit Hilfe von Katalysatoren auf Basis von Verbindungen der Seltenen Erdmetalle, beispielsweise mit Verbindungen des Cers, Lanthans, Praseodyms, Neodyms oder Gadoliniums ist bekannt. Dabei bestehen die Katalysatoren auf Basis von Verbindungen der Seltenen Erdmetalle bevorzugt aus einem Salz des Seltenen Erdmetalls, einer Organoaluminium-Verbindung als Co-Katalysator und einer Verbindung, die Halogen freizusetzen vermag.

Wir verweisen in diesem Zusammenhang auf WO-A 93/05083, worin ein Verfahren zur Polymerisation von konjugierten Dienen mittels eines Katalysators auf Basis von Verbindungen der Seltenen Erdmetalle beschrieben wird.

Nachteilig bei dem in der genannten Patentveröffentlichung beschriebenen Verfahren in Gegenwart des dort verwendeten Katalysators auf Basis von Verbindungen der Seltenen Erdmetalle, die als Halogen-liefernde Verbindung Siliciumhalogenide oder Organosiliciumhalogenide einsetzen, ist die geringe Aktivität des Katalysators und die damit erzielte geringe Polymerisationsrate (Umsatz).

Es bestand nun die Aufgabe, die Nachteile des in WO-A 93/05083 beschriebenen Katalysators bei der Polymerisation von konjugierten Dienen zu vermeiden und ein Katalysatorsystem auf Basis von Verbindungen der Seltenen Erdmetalle zur Verfügung zu stellen, das insbesondere eine hohe Raum-Zeit-Ausbeute, eine geringe Polymerlösungsviskosität und ein hochmolekulares Polybutadien liefert mit ausgezeichneten Verarbeitungseigenschaften, welches im vulkanisierten Zustand verbesserte dynamische und mechanische Eigenschaften aufweist.

Die vorliegende Aufgabe wurde durch ein Katalysatorsystem auf Basis von Verbindungen der Seltenen Erdmetalle dadurch gelöst, dass man als eine Komponente des Katalysatorsystems spezielle Trihalogensilylverbindungen verwendet.

Gegenstand der vorliegenden Erfindung ist daher ein Katalysatorsystem auf Basis von Verbindungen der Seltenen Erdmetalle, bestehend aus
a) einer Verbindungen der Seltenen Erdmetalle,
b) einer organischen Aluminium-Verbindung und
c) einem Trihalogensilan der Formel 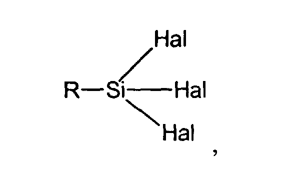 wobei
   - Hal: für Fluor, Chlor oder Brom steht und
   - R: Wasserstoff oder eine Vinylgruppe bedeutet,
   worin die Komponenten a) : b) : c) in einem Gewichts-Verhältnis von 1 : 0,5 bis 5 : 0,05 bis 0,5 vorliegen.

Bevorzugt sind erfindungsgemäß Katalysatorsysteme auf Basis von Verbindungen der Seltenen Erdmetalle, in denen die Komponenten a) : b) : c) in einem Gewichtsverhältnis von 1 : 1 bis 2 : 0,1 bis 0,4 vorliegen.

Als Verbindungen der Seltenen Erdmetalle, Komponente a), werden bevorzugt solche Verbindungen der Seltenen Erdmetalle eingesetzt, die in Kohlenwasserstoffen löslich sind. Ganz besonders bevorzugt werden entsprechende Salze der Seltenen Erdmetalle eingesetzt.

Als Seltene Erdmetalle, die sich zum Aufbau der Komponente a) besonders eignen sind zu erwähnen Cer, Lanthan, Praseodym, Gadolinium und Neodym, wobei Neodym besonders bevorzugt ist.

Als Kohlenwasserstoff lösliche Salze sind zu erwähnen Neodym-carboxylate, speziell Neodym-neodecanoat, Neodym-naphthenat, Neodym-octanat, Neodym-2,2-diethyl-hexanoat, Neodym-2,2-diethyl-heptanoat sowie die entsprechenden Salze des Lanthans oder Praseodyms. Ganz besonders bevorzugt ist Neodymneodecanoat.

Die Verbindungen der Seltenen Erdmetalle können sowohl einzeln als auch im Gemisch untereinander eingesetzt werden, wobei das günstigste Mischungsverhältnis leicht durch entsprechende Vorversuche zu ermitteln ist.

Als organische Aluminiumverbindungen (Komponente b)) kommen die für solche Katalysatorsysteme bekannten Aluminiumalkyle und Aluminiumalkylhydride in Betracht, in denen die Alkylgruppe 1 bis 10, bevorzugt 1 bis 6, Kohlenstoffatome besitzt. Die Aluminiumalkylhydride können eine oder zwei Alkylgruppen besitzen. Bevorzugt sind zu nennen Aluminium-triethyl, Diisobutylaluminiumhydrid, Aluminiumtriisobutyl, ganz besonders bevorzugt Diisobutylaluminiumhydrid.

Als Trihalogensilyl-Verbindungen (Komponente c)) werden bei dem erfindungsgemäßen Katalysatorsystem bevorzugt Tribromsilylhydrid, Trichlorsilylhydrid, Vinyltribromsilan und Vinyltrichlorsilan, insbesondere Trichlorsilylhydrid eingesetzt.

Ganz bevorzugte erfindungsgemäße Katalysatorsysteme auf Basis von Verbindungen der Seltenen Erdmetalle sind solche, die bestehen aus
a) Neodymneodecanoat
b) Diisobutylaluminiumhydrid und
c) Trichlorsilan
   wobei die Komponenten a) : b) : c) in einem Gewichtsverhältnis von 1 : 1 bis 2 : 0,1 bis 0,4 vorhanden sind.

Ein weiterer Gegenstand der vorliegenden Erfindung ist ein Verfahren zur Herstellung der erfindungsgemäßen Katalysatoren auf Basis von Verbindungen der Seltenen Erdmetalle, bestehend aus den vorgenannten Komponenten a), b) und c), das dadurch gekennzeichnet ist, dass man die Komponenten a), b) und c) miteinander bei Temperaturen von -30 bis 100°C, bevorzugt 20 bis 80°C, in den zuvor angegebenen Mengenverhältnissen in Kontakt bringt, das bedeutet, den Einsatz der Komponenten a) : b) : c) in einem Gewichtsverhältnis von 1 : 0,5 bis 5 : 0,05 bis 0,05 bis 0,5, bevorzugt 1 : 1 bis 2 : 0,1 bis 0,4.

Außerdem ist Gegenstand der Erfindung die Verwendung des erfindungsgemäßen Katalysatorsystems auf Basis von Verbindungen der Seltenen Erden mit den zuvor beschriebenen Komponenten a) bis c) für die Polymerisation von konjugierten Dienen.

Die Polymerisation von konjugierten Dienen mittels eines Katalysatorsystems auf Basis von Verbindungen der Seltenen Erdmetalle ist an sich bekannt und wird üblicherweise so durchgeführt, dass man die zu polymerisierenden Diene in einem geeigneten Kohlenwasserstoff, beispielsweise Hexan, löst und anschließend die Katalysatorkomponenten zugibt.

Insbesondere ist darauf zu achten, dass die Katalysatorkomponenten, das Lösungsmittel und das (die) Monomer(en) inert sind, d.h. waserfrei und sauerstofffrei sind.

Selbstverständlich ist es auch möglich, die konjugierten Diene in Abwesenheit oder nur in Gegenwart von geringen Mengen an Lösungsmittel zu polymerisieren.

Bevorzugt wird das erfindungsgemäße Katalysatorsystem in einer solchen Konzentration, den zu polymerisierenden Dienen zugegeben, dass die Komponente a) (Verbindung der Seltenen Erdmetalle) in einer Menge von 0,01 bis 0,2 Gew.-% der Dienmonomeren vorhanden ist. Die optimale Menge an einzusetzendem Katalysatorsystem kann variieren und hängt von den jeweiligen Reaktionsbedingungen ab und von dem gewünschten Molekulargewicht des Polymeren.

Als konjugierte Diene, die mit dem erfindungsgemäßen Katalysatorsystem polymerisiert werden können, sind insbesondere zu nennen Butadien, Isopren, Piperylen, 1,3-Hexadien, 1,3-Octadien, 2-Phenyl-1,3-butadien. Selbstverständlich können die konjugierten Diene auch in Mischungen untereinander copolymerisiert werden. Bevorzugt ist die Herstellung von Polybutadien, Polyisopren und Isopren-Butadien-Copolymere.

Die mit dem erfindungsgemäßen Katalysatorsystem hergestellten Polydiene können bei der Herstellung von Gummiartikeln aller Art, bevorzugt für die Herstellung von Reifen oder Golfbällen verwendet werden. Ebenfalls ist es möglich, insbesondere für das Polybutadien, dieses zu verwenden für die Herstellung von "High Impact Polystyrol" (HIPS).

Im Hinblick auf den bisher bekannten Stand der Technik überrascht es besonders, dass mit dem erfindungsgemäßen Katalysatorsystem auf Basis von Verbindungen der Seltenen Erdmetalle, bei denen spezielle Trihalogensilylverbindungen eingesetzt werden, in hohen Raum-Zeit-Ausbeuten Polydiene erhalten werden können, die sich insbesondere durch ein besonders hohes Molekulargewicht verbunden mit guten Verarbeitungseigenschaften sowie verbesserten dynamischen und mechanischen Eigenschaften bei den Vulkanisaten auszeichnen.

### Beispiele

Die erfindungsgemäßen Polymere wurden in einem inerten, gerührten 2-Liter Autoklav in Hexan polymerisiert. Bei Raumtemperatur werden die Katalysatorkomponenten Neodymneodekanoat (0,2 mmol), Diisobutyaluminiumhydrid (4 mmol), der Kokatalysator und das getrocknete, destabilisierte 1,3-Butadien vorgelegt. Die Polymerisation findet bei 60°C statt und dauert 1 Stunde. Die Polymere werden abgestoppt, stabilisiert, gestrippt und getrocknet.

Verglichen werden Polymere hergestellt nach dem Standardverfahren mit Ethylaluminiumsesquichlorid (0,19 mmol) und Polymere hergestellt mit Trichlorsilan und Trichlorvinylsilan als Cokatalysatoren (gleiche molare Menge wie EASC, bezogen auf Chlorgehalt). Weitere Chlorsilane sind entsprechend Tabelle 1 getestet worden.

Insbesondere die mit TCS und TCVS hergestellten Polymere zeigen zum einen bei gleichem Umsatz (Tabelle 1) und gleicher Mooneyviskosität deutlich geringere Lösungsviskositäten und somit auch geringere Kraftaufnahme am Reaktorrührer (Tabelle 2). Ausserdem sind insbesondere mit diesen Cokatalysatoren deutlich höhere Molgewichte / Mooneyviskositäten zugänglich als mit dem Standardsystem (Tabelle 2)

Die Vorteile dieser Produkte sind in Tabelle 3 dargestellt.

Das mit TCS hergestellte Nd-BR wurde mit dem Standardprodukt verglichen. Obwohl die Polymerviskosität 20 Mooneyeinheiten höher liegt (83) als die des Standardproduktes (63), sind die Verarbeitungseigenschaften ausgezeichnet, da die Mischungsviskositäten gleich sind.

Vulkanisate aus diesem neuen Produkt entsprechend der in Tabelle 3 genannten Rezeptur, zeigen bessere Festigkeiten und Bruchdehnung. Die Elastizitäten sind höher. Daraus folgt für den Fachmann, dass dieses Produkt verbesserte Hystereseeigenschaften, d.h. geringere Hitzebildung bei dynamischerBelastung bietet. Diese Produkte bieten Vorteile in allen Anwendungen in denen dynamische Hitzebildung auftritt.

**Tabelle 1**

| Umsatz bei 60°C | | | |
|---|---|---|---|
| Co-Katalysator | Umsatz (%), molares Verhältnis bezogen auf Chlorgehalt | Umsatz (%), 2-faches molares Verhältnis bezogen auf Chlorgehalt | Umsatz (%), 6-faches molares Verhältnis bezogen auf Chlorgehalt |
| **Standard** | **95** | **99** | **-** |
| **TCS** | **95** | **100** | **-** |
| **TCVS** | **95** | **97** | **-** |
| TCMS | 0 | 57 | 96 |
| DCMPS | 53 | - | 92 |
| DCMVS | 54 | 60 | 77 |
| DCDPS | 44 | 78 | 97 |
| CTMS | 0 | 0 | 0 |
| TCOS | 0 | 11 | 93 |
| TCPS | 69 | 92 | - |
| t-BTCS | 0 | 0 | 0 |
| SiTC | 0 | 75 | 96 |
| CTBS | 0 | 0 | 0 |

| | | | |
|---|---|---|---|
| Standard Ethylaluminiumsesquichlorid | | | |
| TCS Trichlorsilan | | | |
| TCVS Trichlorvinylsilan | | | |
| TCMS Trichlormethylsilan | | | |
| DCMPS Dichlormethylphenylsilan | | | |
| DCMVS Dichlormethylvinylsilan | | | |
| DCDPS Dichlordiphenylsilan | | | |
| CTMS Chlortrimethylsilan | | | |
| TCOS Trichloroctylsilan | | | |
| TCPS Trichlorphenylsilan | | | |
| t-BTCS t-Butyltrichlorsilan | | | |
| SiTC Tetrachlorsilan | | | |
| CTBS Chlortributylsilan | | | |

**Tabelle 2**

| Lösungsviskositäten und Mooney | | | |
|---|---|---|---|
| Co-Katalysator | Mooney Viskosität ML 1+4, 100°C DIN 53523 | Lösungsviskosität 5% in Styrol (mPas⁻¹) DIN 51562 | Rührerdrehmoment (Ncm) |
| Standard | 25 | 290 | 325 |
| | 26 | 290 | 350 |
| | 35 | 385 | 430 |
| | 42 | 505 | 440 |
| | 53 | 770 | 445 |
| | | | |
| TCS | 25 | 120 | 250 |
| | 33 | 230 | 330 |
| | 42 | 400 | 400 |
| | 70 | 750 | 465 |
| | 83 | 1500 | 540 |
| | | | |
| TCVS | 35 | 220 | 270 |
| | 47 | 470 | 340 |
| | 60 | 955 | 340 |
| | 75 | 1380 | 500 |

**Tabelle 3**

| Physikalische Eigenschaften von TCS Nd-BR gegen Standard | | |
|---|---|---|
| TSR 5, Defo 700 | 70 | 70 |
| TCS Nd-BR (Mooney 83) | 30 | |
| Standard Nd-BR (Mooney 63) | | 30 |
| Ruß N-330 | 55 | 55 |
| Enerthene® 1849-1* | 3 | 3 |
| Stearinsäure | 2,5 | 2,5 |
| Antilux® 111** | 1 | 1 |
| Vulkanox® 4020*** | 2,5 | 2,5 |
| Vulkanox® HS**** | 1,5 | 1,5 |
| Zinkoxid RS | 5 | 5 |
| Vulkacit® MOZ***** | 1,2 | 1,2 |
| Schwefel | 2,5 | 2,5 |

| | | |
|---|---|---|
| * = Mineralöl Weihmacher, Mobil Schmierstoff GmbH | | |
| ** = Lichtschutzwachs, Rhein Chemie Rheinau | | |
| *** = Alterungsschutzmittel (6PPD), Bayer AG | | |
| **** = Alterungsschutzmittel (TMQ), Bayer AG | | |
| ***** = Sulfenamid-Beschleuniger (MBS), Bayer AG | | |

| **Mischungseigenschaften** | | |
|---|---|---|
| ML 1+4 100°C DIN 53523 | 93 | 93 |
| | | |

| **Vulkanisateigenschaften (ISO 37)** | | |
|---|---|---|
| Festigkeit (Mpa) | 26,3 | 22,5 |
| Bruchdehnung (%) | 420 | 400 |
| Spannungswert 100% | 3 | 3 |
| Spannungswert 300% | 17 | 17 |
| Härte Shore A 23°C | 70 | 70 |
| Härte Shore A 70°C | 68 | 68 |
| Elastizität 23°C | 54 | 51 |
| Elastizität 70°C | 67 | 63 |

## Patentansprüche

1. Katalysator auf Basis von Verbindungen der Seltenen Erdmetalle, bestehend aus
a) einer Verbindungen der Seltenen Erdmetalle,
b) einer organischen Aluminium-Verbindung und
c) einem Trihalogensilan der Formel 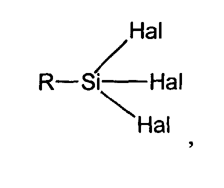 wobei
Hal für Fluor, Chlor oder Brom steht und
R Wasserstoff oder eine Vinylgruppe bedeutet,
worin die Komponenten a) : b) : c) in einem Gewichtsverhältnis von 1 : 0,5 bis 5 : 0,05 bis 0,5 vorliegen.

2. Verfahren zur Herstellung des Katalysators auf Basis von Verbindungen der Seltenen Erdmetalle gemäß Anspruch 1, dadurch gekennzeichnet, dass man eine Verbindung der Seltenen Erdmetalle a), mit einer organischen Aluminiumverbindung b) und einer Trihalogensilylverbindung c) bei Temperaturen von -30 bis 100°C miteinander in Kontakt bringt, wobei die Komponenten a) : b) : c) in einem Gewichtsverhältnis von 1 : 0,5 bis 5 : 0,05 bis 0,5 eingesetzt werden.

3. Verwendung des Katalysator auf Basis von Verbindungen der Seltenen Erdmetalle nach Anspruch 1 für die Polymerisation von konjugierten Dienen.
